# EUROPEAN PATENT SPECIFICATION

(11) **EP 4 161 708 B1**
(45) Date of publication and mention of the grant of the patent: **18.03.2026**
(21) Application number: 20732531.7
(22) Date of filing: 08.06.2020
(51) Int. Cl.: G06N 3/09, G06N 3/091, B07C 5/34

(54) **SORTING SYSTEM FOR SORTING OBJECTS BELONGING TO AT LEAST TWO CLASSES OF OBJECTS HAVING DIFFERENT ACOUSTIC SIGNATURES WHEN IMPACTING AN IMPACT BODY AND ASSOCIATED METHODS**
SORTIERSYSTEM ZUM SORTIEREN VON OBJEKTEN, DIE ZU MINDESTENS ZWEI KLASSEN VON OBJEKTEN MIT UNTERSCHIEDLICHEN AKUSTISCHEN SIGNATUREN BEIM AUFPRALL AUF EINEN KÖRPER GEHÖREN, UND ZUGEHÖRIGE VERFAHREN
SYSTÈME DE TRI POUR TRIER DES OBJETS APPARTENANT À AU MOINS DEUX CLASSES D'OBJETS AYANT DES SIGNATURES ACOUSTIQUES DIFFÉRENTES LORS DE L'IMPACT SUR UN CORPS D'IMPACT ET MÉTHODES ASSOCIÉES

(43) Date of publication of application: 12.04.2023
(73) Proprietor: Commissariat à l'Energie Atomique et aux Energies Alternatives, 75015 Paris (FR); Nanyang Technological University, Singapore 639798 (SG)
(72) Inventor: GABRIEL, Jean-Christophe, 38950 QUAIX-EN-CHARTREUSE (FR); MAURICE, Ange, 34570 MONTARNAUD (FR); BRAMBILLA, Andreas, 38113 VEUREY-VOROISE (FR)
(74) Representative: Ipsilon
(86) International application number: PCT/EP2020/065866
(87) International publication number: WO 2021/249617

(56) References cited:
- KR-A- 20190 071 387
- US-A- 5 639 503
- US-A1- 2020 050 922

## Description

### Technical field

The present invention relates to a sorting system for sorting objects belonging to at least two classes of objects having different acoustic signatures when impacting an impact body and associated methods.

### Background art

Sorting of objects is usually performed with a complex set of sensors which is expensive or directly by human which is costly in time and human effort.

There is a need for a simple, fast and cheap process and system for sorting a high quantity of objects having several different characteristics, possibly in a lot of different classes, as for example electronic components from dismantled printed circuit boards into different type of electronic components.

Furthermore, in a lot of countries wastes are thrown directly from home through a waste disposal chute; the amount of wastes generated per unit area is relatively high and most of them are not sorted to separate recyclable wastes from general wastes and are simply either landfilled or incinerated. This is for example the case in Singapore where only 20% of recyclables are recovered for further recycling. Because of the need of manual sorting by human, lots of people do not perform this separation and many recyclable wastes are thrown through waste disposal chute without any separation. Furthermore, when a human operation separates recyclable wastes from general wastes, there are often errors.

In order to reduce such inconvenience and errors as well as increase the amount of recyclable wastes that are recycled, there is a need for an easy, cheap and fast automated process with an associated system for automatically sorting objects, especially wastes thrown through waste disposal chute.

US 5,253,766 discloses a waste disposal chute for sorting wastes separated in a plurality of parallel chute channels, each channel corresponding to one type of waste. However, such waste disposal chute requires complex and costly retrofitting renovation and that people sort themselves the waste by throwing the waste in the right chute, which does not reduce the sorting error. Furthermore, the limited space in the chute restricts the number of different types of waste that can be sorted.

A sorting system for sorting plastic flakes depending on their composition and/or colour using a plurality of detectors, in particular a camera, a near-infrared sensor and an inductive metal detector, is also known.

The article *"*Development of Automatic Smart Waste Sorter Machine" by Md Mahmudul Hasan Russel; Mehdi Hasan Chowdhury; Md Shekh et al., International Conference on Mechanical, Industrial and Materials Engineering 2013 (ICMIME2013), discloses an automatic sorter machine which can sort out the wastes in various categories. Metal, paper, plastics and glass can be sorted by an electromechanical system using microcontroller and operational amplifier. For sorting metal and glass conventional sensors are used and for sorting paper and plastics a sensor using a laser and a LDR is developed. A weight sensor and counter are used to find out the amount of sorted materials.

EP 148908, CN 109663747 and CN 110201894 disclose the use of acoustic sensors for sorting objects though detection of acoustic waves reflected by the object.

The use of sound of impact of a waste on a predetermined surface coupled with a recognition algorithm is known from EP 1448318 to detect heavy solids by comparing the sound signal to stored reference signals or stored calculated values.

The use of sound of impact of pistachios on a predetermined surface coupled with a recognition algorithm is also known from CN 107303566 to discriminate closed from opened pistachios.

Both KR 101885437 and KR 20190071387 deal with sorting recycling waste between paper, glass and plastic by analysing the sound of the impact of the waste on a predetermined surface. A spectrogram analysis of the acoustic data is generated and compared with either acoustic signatures stored in the system preliminary to its use or includes a learning classifying unit that receives sound data generated when the recycle garbage falls, as learning data, and learns a recycling garbage classification model, respectively.CN 109969655 discloses an intelligent garbage classifying waste depending on their type among metal, glass and plastic, comprising different sensors including camera, metal detector and acoustic sensor.

Such methods and systems are not appropriate for use in pre-existing conventional waste disposal chutes and are not entirely satisfactory to sort objects having a high variability of characteristics such as shape, size, weight or composition into a plurality of classes.

### Problem to be solved

There exists a need to further improve system and methods for sorting objects and to benefit from a quick, reliable, and cheap automatic method for sorting of objects.

There is also a need for an easy system to implement automated process for sorting wastes that are thrown through a waste disposal chute and that can be easily installed in a pre-existing waste disposal chute.

### Disclosure of the invention

The invention relates to a sorting system for sorting objects belonging to at least two classes of objects having different acoustic signatures when impacting an impact body, the system comprising:
- at least one acoustic detector configured to capture acoustic data corresponding to the impact of a candidate object to sort on the impact body,
- a processor for processing acoustic data to identify the class of the candidate object executing a machine learning algorithm trained to identify the class to which a candidate object belongs based on acoustic data of objects previously captured by the acoustic detector and additional information describing said objects, and to generate a sorting information based on the identified class for the candidate object,
- feedback means for providing to the processor an additional information on the candidate object depending on the sorting information generated by the processor.

With the sorting system of the present invention, objects can be actively and automatically sorted in at least two classes that can be distinguished by the sound of the impact on the impact body of the objects. Acoustic detectors, such as microphones, are particularly cheap, which allows to sort objects at a reduced cost. The use of a machine learning algorithm allows to robustly sort the objects into the various classes. The success rate of the identification depends in particular on the differentiation of the acoustic signatures that can be made between the different classes and the training that is performed before the identification of the candidate object. The success rate of the identification in each class may be greater than 70%, greater than 80% or even 90%. In addition, the use of a machine learning algorithm allows adaptation to a wide variety of sounds if the objects, the impact body, the power of the impact, and any other parameter that can affect the sound emitted at the impact, were to change over time.

The feedback means give information on the candidate object which class has been identified by the processor. This allows an a posteriori training of the machine learning algorithm with the acoustic data captured for the candidate object and the additional information provided by the feedback means. Such training improves the performance of the machine learning algorithm in the identification of the class. The processor is configured to train the machine learning algorithm each time an additional information describing a candidate object is provided by the feedback means, the machine learning algorithm being further trained based on the acoustic data of the candidate object correlated with the additional information provided by the feedback means on said candidate object.

Preferably, the sorting system is for sorting objects belonging to at least three classes of object having different acoustic signatures when impacting the impact body.

Preferably, the system is configured such that the objects to sort impacts the impact body one by one.

### Impact body

Preferably, the impact body is in a material selected among metal, organic or inorganic materials such as building materials, for example concrete or bricks, or polymers such as PMMA, polycarbonate, or nylon. When the surface is in polymer, the elastic modulus is preferably above 2000 MPa.

The impact body may be hollow.

The impact body may comprise a part forming a cavity behind an impact surface. Such cavity may amplify the sound that is emitted by the impact which facilitate the detection by the sound detector. The sound detector may be disposed in the cavity.

The impact body may comprise a planar impact surface that is configured to be impacted by the candidate object.

As a variant, the impact body comprise a convex or a concave impact surface or an impact surface with reliefs that is configured to be impacted by the candidate object. The impact body may be a cylindrical body in which the candidate object falls, the impact surface being the internal wall of the cylindrical body.

The impact body may be a monolithic body or comprise different parts that are linked to each other.

The impact body may be configured to filter part of the frequency of the sound. The impact body may be configured to filter the low frequency, for example the frequency below 150 Hz, and/or the high frequency, for example the frequency above 1500 Hz.

The system may comprise the impact body that is impacted by the objects.

The impact body may be fixed, and the system may be configured such that the candidate object falls on the impact body. The system may comprise a conveyor from which the candidate object falls on the impact body.

As a variant, the impact body is mobile to hit the candidate object, the candidate object being fixed or not during the impact.

### Machine learning algorithm

The machine learning algorithm may be based on any appropriate model, such as one or several neural networks, and/or one or several decision trees, and/or one or different classifiers, as for example artificial neural networks, decision trees, support vector machines, regression analysis, bayesian networks, genetic algorithms, preferably on one or several neural networks.

The machine learning algorithm may use models chosen amongst the following: hidden Markov models, Gaussian mixture models, fuzzy methods, Bayesian networks, hidden control or Markov random fields, K-nearest neighbor method, clustering techniques, ensemble methods, bootstrap aggregating or bagging techniques, kernel principal component analysis (PCA), independent component analysis, linear discriminant analysis, kernel-discriminant analysis, linear and non-linear regression models, or genetic algorithms, this list being non-exhaustive.

The machine learning algorithm may be trained on spectrogram extracted from the acoustic data captured by the acoustic detector. The processor may be configured to extract a spectrogram from the acoustic data captured by the acoustic detector before executing the machine learning algorithm and to execute the machine learning algorithm based on the said spectrogram.

As a variant, the machine learning algorithm is trained on the raw acoustic data.

The machine learning algorithm is preferably pre-trained beforehand on acoustic data captured by the acoustic detector of the impact on the impact body of training objects for which classes are known.

The processor may be configured to determine the probabilities that the candidate object belongs to each of the at least two classes using the machine learning algorithm and to identify the class with the higher probability for the candidate object. The processor may further generate a confidence index of the identified class whose value is a percentage characterizing the confidence in the identified class identified by the processor. The confidence index may depend at least on the probability that the candidate object belongs to the identified class determined by the processor. The confidence index may further depend on a predetermined success rate of the identification of objects in the identified class. The confidence index may be:
- the value of the probability determined for the identified class by the processor using the machine learning algorithm, or
- the value of the probability determined for the identified class by the processor using the machine learning algorithm weighted by a predetermined success rate of the identification of objects in the identified class.

The success rate of the identification of objects in a class is predetermined by identification of the class with the sorting system of a plurality of test objects of said class and determination of the percentage of the test objects for which said class has been correctly identified.

The sorting information may comprise information to sort the candidate object in the identified class when the confidence index is above a predetermined threshold and in a default class when the confidence index is below the predetermined threshold. The predetermined threshold may be between 50% and 95%, better between 60% and 90%, better still between 70% and 90%.

The predetermined threshold of the confidence index may be chosen based on the success rate of the class identification obtained for the predetermined threshold and/or on the percentage of objects whose class is identified with a confidence index above the predetermined threshold. The confidence rate is chosen such that the success rate of the identification is high enough to limit error in classifying object and such that the percentage of objects whose class is identified with the confidence index above the predetermined threshold is high enough to allow classification of a high number of objects. The predetermined threshold may be such that the success rate of the class identification is under 70%, better under 85% and the percentage of objects whose class is identified with the confidence index is above 60%, better above 70%.

The sorting information may comprise the identified class and the confidence index of the identified class.

### Feedback means

Preferably, the feedback means is at least one among an optical camera, a Xray transmission technology, in particular a single, dual or multi-energy Xray transmission technology, an infrared, ultraviolet or laser induced breakdown spectrometers (LIBS), or a Human-Machine Interface.

The feedback means may be configured to provide additional information whether the class of the candidate object has been correctly identified by the processor or not and/or corresponding to the class of the candidate object.

The feedback means may be a Human-machine Interface configured to display the class identified by the processor for a candidate object and/or the confidence index and configured such that the user can select whether the identification is correct or not and/or provide the correct class of the candidate object. The processor may be configured to process the additional information on the candidate object correlated to the acoustic data captured for the candidate object to further train the machine learning algorithm.

The feedback means may be a detector, in particular an optical camera, a Xray transmission technology, in particular a single, dual or multi-energy Xray transmission technology, that is configured to identify the class of the candidate object when the confidence index is below the predetermined threshold. In this case, the objects for which the confidence index is below the confidence index threshold may be classed, by the processor, in a default class and the feedback means may identify the class of the objects that are classed in the default class. The identified class is then provided to the processor to train the human machine learning algorithm and improve the performance of the sorting system. Such method allows to class efficiently most of the objects by acoustic detection, which is a cheap and fast detection, the objects that cannot be classed being classed by another method that are more expensive. Therefore, objects are classed efficiently with a cost-effective method.

The feedback means may be a detector, for example an optical camera, a Xray transmission technology, in particular a single, dual or multi-energy Xray transmission technology, an infrared, ultraviolet or laser induced breakdown spectrometers (LIBS), for sorting the candidate object of at least one of the classes into sub-classes and that is configured to identify whether the class of the candidate object has been correctly identified based in particular on criteria different from acoustic signature.

Preferably, the feedback means are connected to the processor through a wireless connection.

### Diverting unit

The system may comprise a diverting unit that takes different configurations depending on the sorting information each corresponding to one of the classes, each configuration directing the candidate object to a different routes corresponding each to at least one of the class.

The diverting unit may take a rest configuration corresponding to a default class and one or more active configurations corresponding to the one or other classes respectively, the diverting unit being in the rest configuration when no impact sound is detected.

The diverting unit may comprise an actuator and one or more flaps that can be moved in different positions by the actuator depending on the sorting information.

At least one of the routes, in particular the route corresponding to the default class, may comprise the feedback means. Preferably, said route comprises a conveyor to convey candidate objects classed in the corresponding class to the feedback means.

### Sorting of objects such as electronic components

In one embodiment, the objects to sort are electronic components, in particular electronic wastes, and the classes comprise each one or more predetermined types of the electronic components, for example selected among active components, passive components and electromechanical components, and/or more precisely transistors, diodes, integrated circuits, optoelectronic devices, display technologies, vacuum tubes, discharge devices, power sources batteries, resistors, capacitors, magnetic devices, memristor, networks, transducers, sensors, detectors, antennas, assemblies, modules, prototyping aids, piezoelectric devices, crystals, resonators, terminals and connectors, cable assemblies, switches, protection devices, mechanical accessories (electrical enclosure, heat sink, fan), bare printed circuit boards, lamp, waveguide, memristor, CPU holder, CPU, coil, flat capacitor, MLCC capacitor, Ceramic Dual In-line Package (CERDIP), coin cell, cylindrical capacitor and heat sink. Each class may consist in one of the above types of the electronic components. As a variant, at least one class can comprise a plurality of the above types of the electronic components.

The classes may comprise a class for electronic components that cannot be classified in the other classes and/or that are unrecognised or that are identified with a confidence index below the predetermined threshold.

One of the class may be a default class, in particular the class for electronic components that cannot be classified in the other classes and/or that are unrecognised or that are identified with a confidence index below the predetermined threshold.

The impact body may have an impact surface of one material having a thickness superior or equal to 0.1 mm, preferably 2 mm, and even preferably superior or equal to 5 mm.

The impact surface may be planar, concave or convex or having relief.

The impact surface may be a planar surface that is horizontal or inclined with respect to the horizontal with an inclination angle that is inferior or equal to 80°.

The impact of the candidate object on the impact body may be performed by dropping the candidate object on the impact body from any height from which the impact of the candidate object on the impact body gives a noise that can be measured by the microphone. Preferably, the height is greater than 10 cm, better greater than 25 cm and/or lower than 10 m, better lower than 1.5 m. If the fall height is too high, the object might bounce too much and if the fall height is too low, the object might not produce a loud enough sound. The candidate objects may fall one after the other from the end of a conveyor belt onto the impact body.

Preferably, the additional information is obtained with optical recognition of the electronic component, using in particular a camera, and/or a Xray transmission analysis, in particular using an XRT detector, and/or an infrared, ultraviolet or laser induced breakdown spectrometers (LIBS).

### Waste disposal chute sorting

In another embodiment, the objects to sort are wastes and the classes are:
- recyclable or belonging to one or more of predetermined types of recyclable wastes, for example plastic, glass, metal or paper, and
- a class for wastes that cannot be classified in the other classes, in particular for general wastes, and/or for which the confidence index is below the predetermined threshold.

Preferably, the class for wastes that cannot be classified in the other classes and/or for which the confidence index is below the predetermined threshold is a default class. This prevents to have false positive in the recyclable classes to avoid contamination of the recyclable wastes with general waste which is more critical than having recyclable wastes in the general wastes.

Preferably, the impact body is the wall of a waste disposal chute. Preferably, the sorting system is configured such that the machine learning algorithm is directly trained with objects falling in a waste disposal chute on which the system is mounted. The system can be easily mounted in the pre-existing waste disposal chute, the training of the machine learning algorithm being performed in situ, and the sorting is performed depending on the specificity of the waste disposal chute.

The sorting system may comprise the waste disposal chute.

The waste disposal chute may comprise openings at different heights corresponding to different floor. The openings may be at a height superior to 0.5 m, better superior to 1.5 m, even better superior to 2,5 m from the diverting unit.

The acoustic data may correspond to the sound emitted by one or a plurality of impacts of the candidate object on the wall of the waste disposal chute during its fall.

The candidate objects may be dropped by a user in the waste disposal chute from different floors.

The feedback means may be a Human-Machine Interface (HMI) configured to display the identified class and/or the confidence index of the identified class, for example the HMI comprise one or more waste class indicator, such as LED, indicating to the user the identified class. The HMI may comprise an interface, such as a touch screen or one or more buttons, configured to allow the user to confirm or not if the identified class is correct and/or to indicate the class of the candidate object. The information of the user is provided to the processor as additional information for training the machine learning algorithm.

### Method for training the machine learning algorithm

The invention is further related to method for training the machine learning algorithm of the sorting system described above, the method comprising:
- capturing, with an acoustic detector, acoustic data corresponding to the impact of a candidate object to sort on the impact body,
- identifying the class to which the candidate object belongs using the machine learning algorithm trained to identify the class based on acoustic data of the impact of objects previously captured and additional information describing said objects,
- generating a sorting information based on the identified class for the candidate object,
- generating an additional information on the candidate object depending on the sorting information with feedback means,
- training the machine learning algorithm with the acoustic data captured for the candidate object and the additional information on the candidate object received from the feedback means.

All the features described in relation with the sorting system above apply to the method.

The additional information describing said objects can be the class of the said objects that impact the impact body and for which acoustic data has been captured or a feedback information whether the class for a candidate object has been correctly identified during the identification or not.

The identification may comprise determining the probabilities that the candidate object belongs to each of the at least two classes using the machine learning algorithm and identifying the class with the higher probability for the candidate object.

The method can comprise determining a confidence index whose value is a percentage characterizing the confidence in the identified class. The confidence index may depend at least on the probability that the candidate object belongs to the identified class determined by the processor using the machine learning algorithm. The confidence index may further depend on a predetermined success rate of the identification of objects in the identified class. The success rate of the identification of objects in a class is predetermined by identification with the system of a plurality test objects of said class and determination of the percentage of the test objects for which said class has been correctly identified by the processor.

The additional information may be generated with the feedback means when the confidence index is below a predetermined threshold. The predetermined threshold may be between 60% and 95%, better between 70% and 90%, better still between 80% and 90%.

The method may comprise conveying the candidate object for which the confidence index is below a predetermined threshold to the feedback means for identification of the class to which it belongs. The method may comprise sorting the candidate object in a default class when the confidence index is below a predetermined threshold and identifying the class to which the candidate object belongs with the feedback means.

### Method for identification of the class

The invention is further related to a method for sorting objects belonging to at least two classes of objects having different acoustic signatures when impacting an impact body, the method comprising:
- capturing, with an acoustic detector, acoustic data corresponding to the impact of a candidate object to sort on the impact body,
- identifying the class to which the candidate object belongs using a machine learning algorithm trained to identify the class based on acoustic data of the impact of objects previously captured and additional information describing said objects,
- determining a confidence index of the identified class,
- generating a sorting information based on the identified class for the candidate object and on the confidence index of the identified class,
- diverting the candidate object to a corresponding route based on the sorting information.

The method is performed with a sorting system as previously described.

The machine learning algorithm may be trained with the training method described above.

All the features described in relation with the sorting system above or the training method above apply to this method independently from the sorting system.

The sorting information may comprise information to sort the candidate object in the identified class when the confidence index is above a predetermined threshold and in a default class when the confidence index is below the predetermined threshold.

The method may comprise diverting the candidate object to feedback means when the confidence index is below the predetermined threshold.

### Description of the Drawings

The invention may be better understood from reading the following detailed description of non-limiting implementation examples thereof, and with reference to the attached drawing, in which:
- Figure 1 is a block diagram showing some exemplary steps of the method according to the invention,
- Figure 2 is a schematic drawing of an example of a sorting system according to the invention,
- Figure 3 is a block diagram showing some exemplary steps of the method for sorting objects with the sorting system of figure 2,
- Figure 4A to 4D are graphs representing the probabilities for each class determined by the sorting system of figure 2 using the machine learning algorithm on acoustic data for different electronic component,
- Figure 5 is a graph representing the additional information provided by the feedback means of the sorting system of figure 2,
- Figure 6 is a confusion matrix for the sorting method illustrated on figure 3,
- Figure 7 is a graph representing the success rate and the percentage of electronic components sorted depending on the confidence index threshold,
- Figure 8 is a schematic drawing of another example of a sorting system according to the invention integrated in a waste disposal chute,
- Figure 9 is a block diagram showing some exemplary steps of the method for sorting objects with the sorting system of figure 5,
- Figure 10 is a graph of the amplitude of the sound emitted by the impact of a waste on the walls of a waste disposal chute over time captured by the microphone with the sorting system of figure 5,
- Figures 11A to 11D are spectrograms of the sound emitted by the impact of different types of wastes captured by the microphone of the sorting system of figure 5.

### Detailed Description

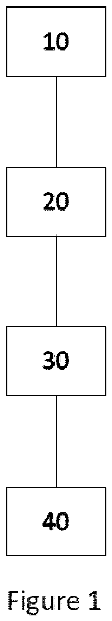

An example of detailed steps of the method for sorting objects belonging to at least two classes of objects having different acoustic signatures when impacting an impact body according to the invention is described below with reference to figure 1.

**In** this example, in a step 10, acoustic data corresponding to the impact of the candidate object on an impact body is captured with an acoustic detector, in particular a microphone and sent to a processor. Acoustic data is for example the amplitude of the sound over time that is generated by the impact of the candidate object on the impact body.

**In** step 20, the processor generates a spectrogram of the sound from the acoustic data that has been captured. The spectrogram of the sound is then processed to determine the probability for the candidate object to belong to each of the at least two classes, preferably at least three classes, using a machine learning algorithm trained to identify acoustic signatures for each class in the acoustic data based on acoustic data of the impact of objects previously captured and additional information describing said objects. Then the processor identifies the class of the candidate object as the class with the highest probability. The machine learning algorithm may be trained by correlating spectrograms extracted from acoustic data of the impact of objects previously captured with additional information describing the objects to learn at least one acoustic signature for each class.

The processor may further generate a confidence index based on the probability for the candidate object to belong to the identified class. The confidence index may further depend on a predetermined success rate, also called accuracy, of the identification of objects in the identified class. The confidence index may be:
- the value of the probability determined for the identified class by the processor using the machine learning algorithm, or
- the value of the probability determined for the identified class by the processor using the machine learning algorithm weighted by a predetermined success rate of the identification of objects in the identified class.

The success rate, also called accuracy of the identification of objects in a class is predetermined by identification with the system of a plurality of test objects of said class and determination of the percentage of the test objects for which said class has been correctly identified.

As a variant, the processor identification of the class is performed on the raw acoustic data, the machine learning algorithm being trained by correlating raw acoustic data of the impact of objects previously captured with additional information describing the objects.

The machine learning algorithm may be based on one or several neural networks, and/or one or several decision trees, and/or one or different classifiers, as for example support vector machines (SVM), preferably on one or several neural networks.

Preferably, the machine learning algorithm is pre-trained with objects that impact the said impact body and for which additional information are received. During the pre-training step, the additional information is preferably the class of the object. The additional information is for example captured by an optical camera and/or a multi-energy Xray transmission technology, and/or given by a Human-Machine interface.

The machine learning algorithm is further trained whenever additional information describing a candidate object for which acoustic data of the impact has been captured is received, in particular during operation.

The additional information may be:
- the class of an object that impacts the impact body and for which acoustic data has been captured,
- an information whether the class for a candidate object has been correctly identified based on the acoustic data of the impact on the impact body by the processor or not, or
- any other information that can allow to deduct the class to which an object belongs and/or to which an object does not belong.

The additional information describing the object may be based on information given by feedback means. The feedback means may be a Human-Machine interface and/or a system for sorting the candidate object into sub-classes that is performed thereafter and that can identify whether the class of the candidate object has been correctly identified and/or a system for identifying the class of the object when the confidence index is below a predetermined threshold. The predetermined threshold may be between 50% and 95%, better between 60% and 90%, better still between 70% and 90%.

The predetermined threshold of the confidence index may be chosen based on the success rate of the class identification obtained for the predetermined threshold and/or on the percentage of objects whose class is identified with the confidence index above the predetermined threshold. The confidence rate is chosen such that the success rate of the identification is high enough to limit error in classifying object and such that the percentage of objects whose class is identified with the confidence index above the predetermined threshold is high enough to allow classification of a high number of objects. The predetermined threshold may be such that the success rate of the class identification is under 70%, better under 85% and the percentage of objects whose class is identified with the confidence index is above 60%, better above 70%.

For example, the additional information is given by a Human Machine interface on which the processor displays the class identified by the processor for a candidate object and the user may enter the class of the candidate object or indicate if the class identified for the candidate object is correct. Then, the machine learning algorithm is further trained with the new additional information.

In a variant, the additional information is given by a system comprising an optical camera and/or a Xray transmission technology that is able to identify the class of the object. This system can be used to identify candidate objects for which the confidence index is below the predetermined threshold and/or to class the objects of a class into sub-classes and in the same time to identify objects that has been wrongly classified in said class.

In step 30, the processor generates sorting information based on the class of the candidate object identified using the machine learning algorithm and on the confidence, index determined by the processor. The sorting information may comprise information to sort the candidate object in the identified class when the confidence index is above a predetermined threshold and in a default class when the confidence index is below the predetermined threshold

In step 40, the sorting information is received and processed by a diverting unit to divert the candidate object onto a route corresponding to the sorting information. The different routes to which the diverting unit can divert the candidate object may each correspond to one class and may lead to respective bins, corresponding to the identified class for the candidate object or to further operations on the object, for example to another sorting system for sorting the objects belonging to a class into sub-classes or to another sorting system to identify the class when the confidence index in below the predetermined threshold. The diverting unit may comprise a route corresponding to a default class that leads to feedback means configured to identify the class of the candidate object.

### Example 1

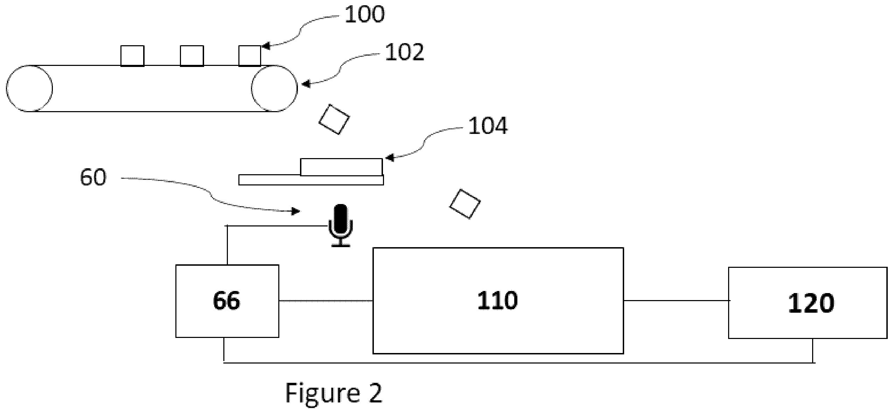

An example of sorting electronic components according to the invention is now described in relation with figures 2 to 4.

Figure 2 illustrates a system for sorting electronic components 100 that are mixed up, for example electronic components from dismantled printed circuit boards, according to the invention. The system is configured to sort the electronic components into the following categories : CPU (A), CPU holder (B), coil (C), Flat capacitor (D), MLCC capacitor (E), Cerdip (F), coin cell (G), connector (H), cylindrical capacitor (I), heat sink (J), resonator (K) and electronic components which category are not identified.

In this example, the electronic components 100 fall one by one from a conveyor belt 102 and rebound onto a known surface 104 prior to fall further and be sorted.

The surface 104 is for example a dense PMMA surface having a thickness of 10 mm. The surface 104 is preferably spaced from the conveyor belt 102 by a distance of approximately 30 cm. The surface 104 is positioned horizontally on a tabletop. However, the surface could be inclined.

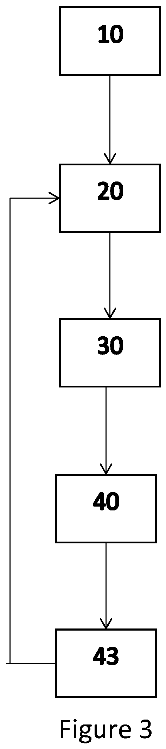

The impact of an electronic component 100 on the surface 104 emits a sound whose amplitude over time is captured by a microphone 60 during the step 10 of figure 3.

The microphone 60 is connected through a wire or wireless connection to a processor 66. The acoustic data captured by the microphone 60 is sent to the processor 66 which processes it at step 20 of figure 3.

In the step 20, the processor 66 extracts a spectrogram from at least a part of the captured amplitude of the sound over time.

In view of the spectrogram extracted, the processor 66 determines the probability for the electronic component to belong to each category using a machine learning method trained to identify the category of the electronic waste 100 based on the amplitude of the sound over time of the impact of known electronic components previously captured.

In this example, the machine learning algorithm is based on a convolutional neural network with the following successive layers:
- an input layer of with 20 000 nodes, and
- an output layer with 10 nodes.

For all layers, the rectified linear unit activation function has been used. The optimiser is the Adam optimization algorithm and the loss function is sparse categorical cross entropy.

The machine learning algorithm has been pre-trained beforehand with known electronic components of the different categories.

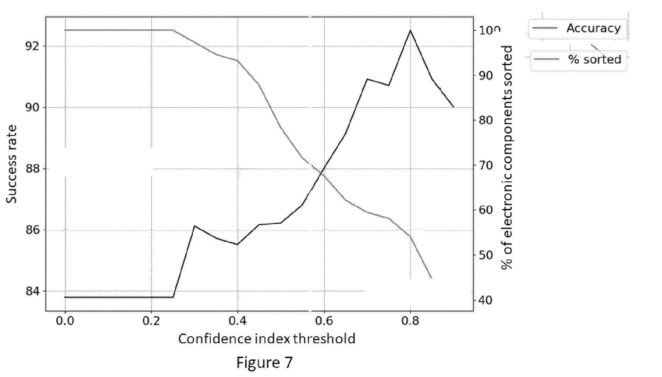

Then, the processor determines which category has the higher probabilities and a confidence index corresponding to the probability that the identified category is correct. A confidence index threshold is defined. If the confidence index is above the confidence index threshold, the electronic component is identified as belonging to the identified category. If the confidence index is below the confidence index threshold, the electronic component is classed in the category of electronic components which category cannot be identified. The confidence index threshold is determined by analysing the success rate of the category identification and the percentage of electronic components for which the category can be identified for different confidence index threshold. The corresponding curves are illustrated on figure 7. For example, for a confidence index threshold of 50%, the success rate is up to 86.5% and 60% of the electronic components are identified with a confidence index above 50%. In the present example, the confidence index threshold is set at 50%.

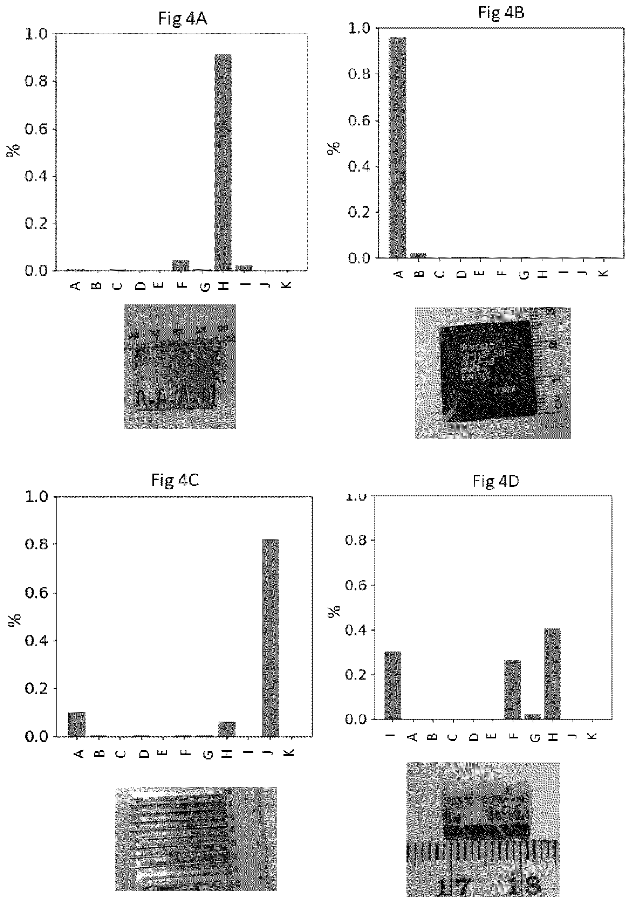

For example, figures 4A to 4D illustrates probabilities determined for a connector (figure 4A), a CPU (figure 4B), a heat sink (figure 4C) and an aluminium capacitor (figure 4D). The connector (H), the CPU and the heat sink (J) are well identified with a probability, i.e a confidence index, that is above 80%. For the aluminium capacitor (L), the highest probabilities determined by the processor is for using the machine learning algorithm is for the category "connector" with a probability of 40%. In this case, the confidence index, i.e the probability, is below 50% and the aluminium capacitor is classed in the category of electronic components which category cannot be identified.

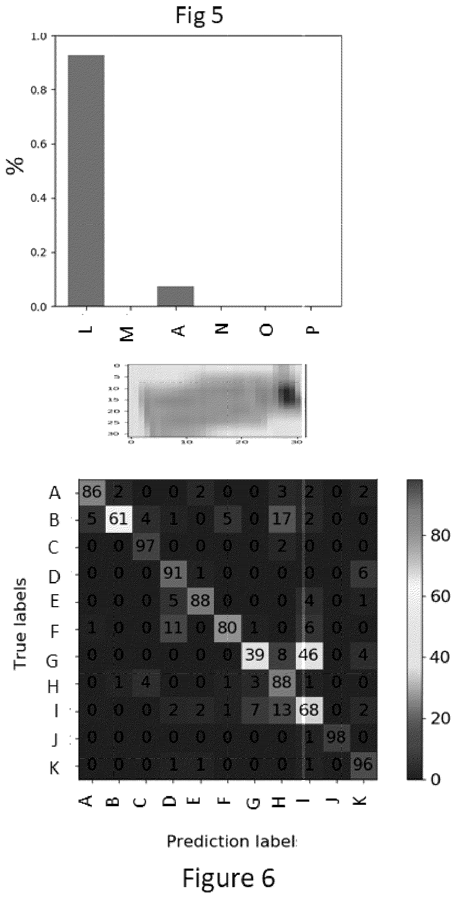

The performance of the machine learning algorithm is represented in the confusion matrix of figure 6. The matrix indicates that good identification is obtained for CPUs, coils, connectors, heat sinks and resonator. Lower quality identification is obtained for cylindrical, coin cell, CPU holder.

In view of the confusion matrix above, the method of the invention may be used to sort some types of electronic components that are well identified by the method of the invention, the other types of electronic components being categorized in a default category that is further sorted by other methods. Such method allows in particular to reduce the cost of the sorting by sorting efficiently part of the components with a cheap and fast method.

After identification of the category, in step 30, the processor 66 generates a sorting information depending on the identified category.

In step 40, the sorting information is provided to a diverting unit 110 that is configured to direct the electronical components to different route depending on the identified category. The diverting unit 110 can be of any type. For example, the diverting unit 110 comprises an actuator and a plurality of flaps that are controlled by the actuator depending on the sorting information received.

The route for the electronical components for which the category was not identified with a confidence index above 50% leads to a X-ray detector 120 that is configured to detect the category to which the electronical component belongs at step 43 of figure 3. For example, for the aluminium capacitor from figure 4D that was not well identified by the processor, the X-ray analysis, which probability result is given on figure 5, allows to identify that the electronical component is a cylindrical capacitor with a probability higher than 90%. The X ray analysis even allow to distinguish the material of the capacitor among aluminium (L), Barium (M) and tantalum (P) and to detect inductance (N).

The information of the class identified by the X-ray analysis is sent back to the processor to further train the machine learning algorithm and improve the identification of the category by the machine learning algorithm.

The further X-ray analysis are performed in transmission. The electronic components are laid out on a plate that is transparent to X-rays. When performing acquisition, the plate is scanned over and an X-ray spectroscopy mapping of the plate with the components is reconstructed, as visible on figure 5. Thanks to the multi-energy capabilities of the X-ray detector 120, each pixel of the mapping yields an attenuation spectrum with 64 values. This information enables the detection of category and the composition by running a linear discriminant analysis.

With the present example, approximately 60% of the electronic components are classed without the need of further analysis and 40% cannot be classed by the processor using the sound data and are classed with the X-ray detector analysis. This allows to have a cheap, easy and fast analysis with a good success rate for all electronical components.

### Example 2

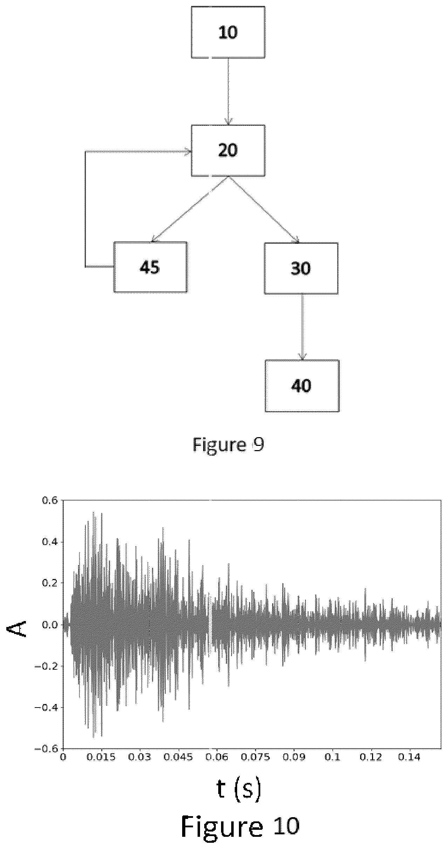

An example of sorting wastes according to the invention is now described in relation with figures 9 to 11D.

Figure 5 illustrates a system for sorting wastes according to the invention integrated in a waste disposal chute 50. The system is configured to sort wastes into different categories.

In the illustrated system, the wastes are sorted into two categories: recyclable wastes and wastes that are not recyclable.

A candidate waste 100 is thrown in the waste disposal chute through openings 55 at each floor 57 and falls into the chute 50 while impacting the walls of the waste disposal chute 50 one or more time as illustrated on figure 5 by the dotted line. The one or several impacts of the candidate waste on the walls of the waste disposal chute 50 emit a sound whose amplitude over time is captured by a microphone 60 during the step 10 of figure 6. The microphone 60 is preferably positioned in a cavity 62 that is separated from the waste disposal chute 50 by a grid 64 as visible on figure 5.

The microphone 60 is connected through a wire or a wireless connection to a processor 66. The amplitude of the sound over time captured by the microphone 60 is sent to the processor 66 which processes it in a step 20 of figure 6.

An example of the amplitude of the sound over time of a single impact of a candidate waste on the walls of the waste disposal chute 50 captured by the microphone 60 is represented on figure 7.

In the step 20, the processor 66 extracts a spectrogram from at least a part of the amplitude of the sound over time captured. For example, the processor 66 extracts the spectrogram of the first impact of the candidate waste on the walls of the waste disposal chute.

In view of the extracted spectrogram, the processor 66 identifies if the candidate waste is recyclable using a machine learning algorithm trained to identify if a candidate waste is recyclable based on the amplitude of the sound over time of the impact of objects previously captured and additional information describing said objects. A confidence index is given to the identification corresponding to the percentage the waste belongs to the identified class the machine learning algorithm determined. When the confidence index is above 50%, the identified class is confirmed, when the confidence index is below 50%, the waste is automatically class in the non-recyclable class to avoid the classification of non-recyclable waste in the recyclable class.

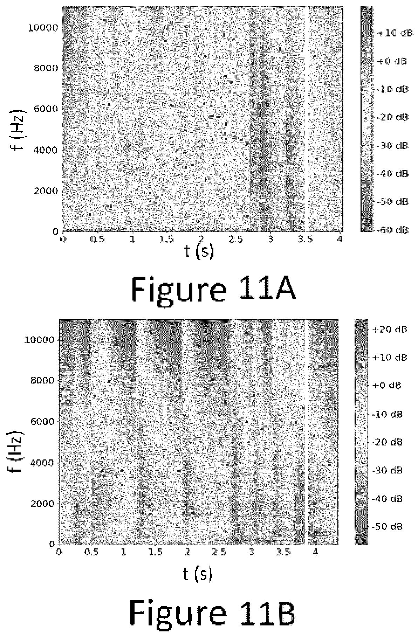

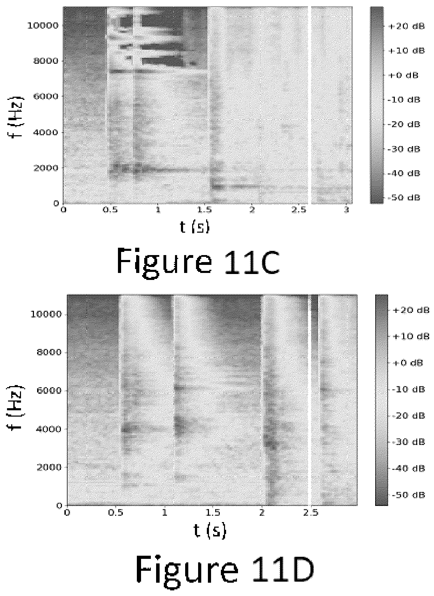

Example of different spectrograms of sound of the first impact of candidate wastes of different types are given on figures 11A to 11D. Figure 11A represents the spectrogram of a trash bag, figure 11B represents the spectrogram of a carton package for food of the Tetra Pak^{®} type, figure 11C represents the spectrogram of a glass, and figure 11D represents the spectrogram of a compressed tin can. As can be seen in the spectrograms of figures 11A to 11D, the acoustic signatures of the different wastes are very different. Glass typically produce narrow, high frequency pitches from 8 to 12 kHz. Metal, in particular aluminium cans, tend to resonate between 4kHz to 6kHz. Cardboard and plastics produce some low power features at lower frequencies. Trash bags produce white noises with no particular resonances. Acoustic signatures of plastics box) and trash bags are very similar, but they can be discriminate due to their different shape that produce a slightly different sound.

After identification whether a candidate object belong to a recyclable class, the processor 66 generates a sorting information depending if the waste is identified as recyclable or not in step 30.

In step 40, the sorting information is provided to an actuator 70 that controls the rotation of a flap 72 between two positions, a default position, represented with a solid line on figure 2, that directs the candidate waste to a bin 74 for non-recyclable wastes and an active position, represented with a dotted line on figure 2, that directs the candidate waste to a bin 76 for recyclable waste. When the processor 66 identified a recyclable waste, the sorting information is such that the actuator 70 rotates the flap 72 from the default position to the active position until the candidate waste is diverted. Once the candidate waste has been diverted, the flap 72 is returned to the default position such that a waste that would not be detected would fall in the non-recyclable waste bin 74 instead of in the recyclable bin 76. This limits the sorting error in the recyclable bin 76 as error in the recyclable bin 76 would cause more problem than error in the non-recyclable bin 74.

Preferably, the falling of the candidate waste in the waste disposal chute toward the flap 72 lasts more than 370 ms. Accordingly, the distance between the flap 72 and the height to which the candidate waste is thrown is more than 0.7 m, preferably more than 1 m.

In this example, the machine learning algorithm is based on a convolutional neural network with the following successive layers:
- an input layer having a filter size of 16 and a kernel size of 2,
- a max pooling layer with a pooling size of 2,
- an aggressive dropout layer to improve accuracy and reduce overfitting,
- a flatten layer that transform the matrix in a 1D array,
- a dense layer with 1024 nodes, and
- an output layer with 1 node.

For all layers, the rectified linear unit activation function has been used. The optimiser is the Adam optimization algorithm and the monitored loss is Binary cross entropy.

The machine learning algorithm could be pre-trained on site with known wastes using a Human-Machine interface 80 to indicate to the machine learning algorithm the type of waste that are thrown one by one in the waste disposal chute. From the amplitude of the sound over time captured for known wastes, the machine learning algorithm learns at least one acoustic signature for the recyclable wastes.

At step 45 of figure 6, the machine learning algorithm may be further trained during its use with feedback information obtained from the user that indicates whether the recyclable waste has been correctly identified.

When the processor 66 identified if a candidate waste is recyclable, it may display the result of the identification on the Human-Machine interface 80 at the floor at which the candidate waste has been thrown for a predetermined time. For example, the Human-Machine interface 80 may comprise a red LED for a non-recyclable waste and a green LED for a recyclable waste. The LED are switched on depending on the waste type identified: when a recyclable waste has been identified, the green light is switched on and when a non-recyclable waste is identified, the red light is switched on. Therefore, the user checks visually if the processor correctly identified the candidate waste he thrown. To send back to the processor 66 if the identification has been correct, the Human-Machine interface 80 may comprise a unit, for example a button or a touch screen, on which the user may indicate if the candidate waste he thrown has been correctly identified by the processor 66 and/or the nature of the candidate waste. The feedback information is processed by the processor 66 in relation with the acoustic data of the impact of said candidate waste captured by the microphone 60 to train the machine learning algorithm and improve the accuracy of the identification.

Preferably, the Human-Machine interface 80 is connected to the processor 66 with a wireless connection. This allows to easily install the system in an existing waste disposal chute.

As the feedback information is received from the user, it may be received long after the candidate waste has been diverted by the flap 72 and therefore is not used to correct the sorting information when the latter is incorrect.

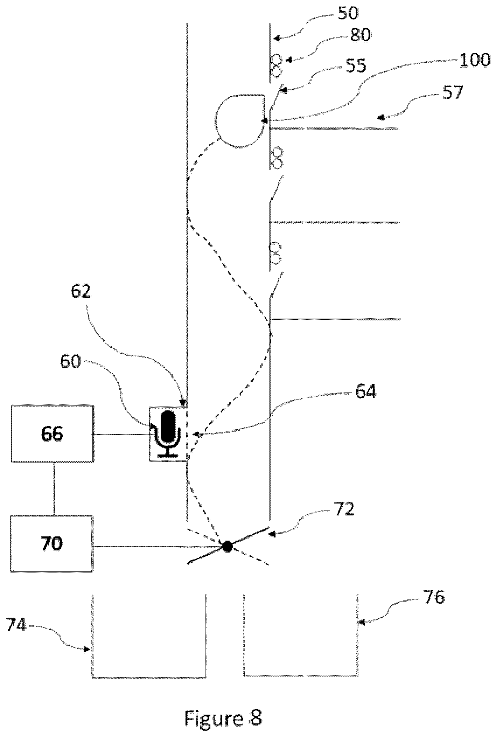

With the system as described above, it may also be possible to identify different types of recyclable wastes among plastic, glass, metal and/or paper as their spectrograms have each a specific signature as visible on figure 8A to 8D. the machine learning algorithm could be trained such that the processor 66 can identify the above types and generates a sorting information different for each type of recyclable waste. It is therefore possible to sort the recyclable wastes depending on their type into specific bin by the flap 72 of by a combination of a plurality of flaps or by any other means able to divert objects.

With the above system, the recyclable wastes are correctly identified with a success rate between 70 to 100%. More the machine learning is trained, better is the success rate. The accuracy of the identification after training on several wastes is around 80% with 18 training samples and 8 validation samples. Similar success rate could be obtained for the identification of the type of the recyclable waste among glass, metal, plastic and paper or carton with more data to train the model.

**In** a variant, the system is adapted to correct the sorting information depending on the feedback information sent by the user when such information is provided. The candidate waste could be received in a waiting area in which it may be stored during the time given to the user to send feedback information.

The invention is not limited to the examples that have just been described.

## Claims

1. Sorting system for sorting objects (100) belonging to at least two classes of objects, preferably at least three classes of objects, having different acoustic signatures when impacting an impact body (50, 104), the system comprising:
- at least one acoustic detector (60) configured to capture acoustic data corresponding to the impact of a candidate object (100) to sort on the impact body (50, 104),
- a processor (66) for processing acoustic data to identify the class of the candidate object (100) executing a machine learning algorithm trained to identify the class to which a candidate object (100) belongs based on acoustic data of objects previously captured by the acoustic detector (60) and additional information describing said objects, and to generate a sorting information based on the identified class for the candidate object,
**characterised by** feedback means (80, 120) for providing to the processor (66) an additional information on the candidate object depending on the sorting information generated by the processor (66).

2. System according to claim 1, comprising the impact body (50, 104) that is impacted by the candidate object (100).

3. System according to any one of preceding claims, wherein the machine learning algorithm is based on any appropriate model, such as one or several neural networks, and/or one or several decision trees, and/or one or different classifiers, as for example artificial neural networks, decision trees, support vector machines, regression analysis, bayesian networks, genetic algorithms, preferably on one or several neural networks.

4. System according to any one of preceding claims, comprising a pre-training phase in which the machine learning algorithm is trained on acoustic data captured for objects for which classes are known.

5. System according to any one of preceding claims, the processor (66) being configured to determine the probabilities that the candidate object (100) belongs to each of the at least two classes using the machine learning algorithm and to identify the class with the higher probability for the candidate object (100).

6. System according to any one of preceding claims, wherein the processor (66) generates a confidence index of the identified class whose value is a percentage characterizing the confidence in the identified class identified by the processor (66), the confidence index depending preferably at least on the probability that the candidate object (100) belongs to the identified class determined by the processor (66), the sorting information preferably comprising information to sort the candidate object (100) in the identified class when the confidence index is above a predetermined threshold and in a default class when the confidence index is below the predetermined threshold, the predetermined threshold being preferably between 50% and 95%, better between 60% and 90%, better still between 70% and 90%.

7. System according to any one of preceding claims, wherein the feedback means (80, 120) is at least one among an optical camera, a Xray transmission technology, in particular a single, dual or multi-energy Xray transmission technology, an infrared, ultraviolet or laser induced breakdown spectrometers (LIBS), or a Human-Machine Interface.

8. System according to any one of preceding claims, wherein the feedback means (80, 120) is configured to provide additional information whether the class of the candidate object (100) has been correctly identified by the processor (66) or not and/or corresponding to the class of the candidate object (100).

9. System according to any one of preceding claims, wherein the feedback means is a Human-machine Interface (80) configured to display the class identified by the processor (66) for a candidate object (100) and/or the confidence index and configured such that the user can select whether the identification is correct or not and/or provide the correct class of the candidate object (100).

10. System according to any one of claims 1 to 10, wherein the feedback means (120) is a detector, in particular an optical camera, a Xray transmission technology, in particular a single, dual or multi-energy Xray transmission technology, that is configured to identify the class of the candidate object when the confidence index is below the predetermined threshold.

11. System according to any one of claims 1 to 8, wherein the feedback means is a detector, for example an optical camera, a Xray transmission technology, in particular a single, dual or multi-energy Xray transmission technology, an infrared, ultraviolet or laser induced breakdown spectrometers (LIBS), for sorting the candidate object (100) of at least one of the classes into sub-classes and that is configured to identify whether the class of the candidate object (100) has been correctly identified based in particular on criteria different from acoustic signature.

12. System according to any one of preceding claims, comprising a diverting unit (70, 72, 110) that takes different configurations depending on the sorting information each corresponding to one of the classes, each configuration directing the candidate object (100) to a different routes corresponding each to at least one of the class.

13. System according to any one of preceding claims, the objects to sort are electronic components, in particular electronic wastes, and the classes comprise one or more predetermined types of the electronic components, for example selected among active components, passive components and electromechanical components, and/or more precisely transistors, diodes, integrated circuits, optoelectronic devices, display technologies, vacuum tubes, discharge devices, power sources batteries, resistors, capacitors, magnetic devices, memristor, networks, transducers, sensors, detectors, antennas, assemblies, modules, prototyping aids, piezoelectric devices, crystals, resonators, terminals and connectors, cable assemblies, switches, protection devices, mechanical accessories (electrical enclosure, heat sink, fan), bare printed circuit boards, lamp, waveguide, memristor, CPU holder, CPU, coil, flat capacitor, MLCC capacitor, Ceramic Dual In-line Package (CERDIP), coin cell, cylindrical capacitor and heat sink.

14. Method for training the machine learning algorithm of the sorting system according to any one of preceding claims, the method comprising:
- capturing, with an acoustic detector (60), acoustic data corresponding to the impact of a candidate object to sort on the impact body (50, 104),
- identifying the class to which the candidate object (100) belongs using the machine learning algorithm trained to identify the class based on acoustic data of the impact of objects previously captured and additional information describing said objects,
- generating a sorting information based on the identified class for the candidate object,
- generating an additional information on the candidate object depending on the sorting information with feedback means (80, 120),
- training the machine learning algorithm with the acoustic data captured for the candidate object (100) and the additional information on the candidate object received from the feedback means (80, 120).

15. Method for sorting objects belonging to at least two classes of objects having different acoustic signatures when impacting an impact body, the method being performed with a sorting system according to any one of claims 1 to 13, the method comprising:
- capturing, with an acoustic detector (60), acoustic data corresponding to the impact of a candidate object to sort on the impact body (80, 104),
- identifying the class to which the candidate object belongs using a machine learning algorithm trained to identify the class based on acoustic data of the impact of objects previously captured and additional information describing said objects,
- determining a confidence index of the identified class,
- generating a sorting information based on the identified class for the candidate object and on the confidence index of the identified class,
- diverting the candidate object to a corresponding route based on the sorting information.

## Patentansprüche

1. Sortiersystem zum Sortieren von Objekten (100), die zu mindestens zwei Klassen von Objekten gehören, vorzugsweise mindestens drei Klassen von Objekten, mit unterschiedlichen akustischen Signaturen beim Aufprall auf einen Aufprallkörper (50, 104), wobei das System Folgendes umfasst:
- mindestens einen akustischen Detektor (60), der dazu ausgelegt ist, akustische Daten zu erfassen, die dem Aufprall eines zu sortierenden Kandidatenobjekts (100) auf den Aufprallkörper (50, 104) entsprechen,
- einen Prozessor (66) zum Verarbeiten akustischer Daten zum Identifizieren der Klasse des Kandidatenobjekts (100), der einen Maschinenlernalgorithmus ausführt, der trainiert ist, die Klasse zu identifizieren, zu der ein Kandidatenobjekt (100) gehört, basierend auf akustischen Daten von Objekten, die zuvor durch den akustischen Detektor (60) erfasst wurden, und zusätzlichen Informationen, die die Objekte beschreiben, und Sortierinformationen basierend auf der identifizierten Klasse für das Kandidatenobjekt zu erzeugen,
**gekennzeichnet durch** Rückmeldemittel (80, 120) zum Bereitstellen einer zusätzlichen Information über das Kandidatenobjekt an den Prozessor (66) in Abhängigkeit von den durch den Prozessor (66) erzeugten Sortierinformationen.

2. System nach Anspruch 1, umfassend den Aufprallkörper (50, 104), auf den das Kandidatenobjekt (100) aufprallt.

3. System nach einem der vorhergehenden Ansprüche, wobei der Maschinenlernalgorithmus auf einem beliebigen geeigneten Modell basiert, wie etwa einem oder mehreren neuronalen Netzwerken und/oder einem oder mehreren Entscheidungsbäumen und/oder einem oder verschiedenen Klassifizierern, wie zum Beispiel künstlichen neuronalen Netzwerken, Entscheidungsbäumen, Support-Vektor-Maschinen, Regressionsanalyse, bayesschen Netzwerken, genetischen Algorithmen, vorzugsweise auf einem oder mehreren neuronalen Netzwerken.

4. System nach einem der vorhergehenden Ansprüche, das eine Vortrainingsphase umfasst, in der der Maschinenlernalgorithmus an akustischen Daten trainiert wird, die für Objekte erfasst werden, für die Klassen bekannt sind.

5. System nach einem der vorhergehenden Ansprüche, wobei der Prozessor (66) dazu ausgelegt ist, die Wahrscheinlichkeiten, dass das Kandidatenobjekt (100) zu jeder der mindestens zwei Klassen gehört, unter Verwendung des Maschinenlernalgorithmus zu bestimmen und die Klasse mit der höheren Wahrscheinlichkeit für das Kandidatenobjekt (100) zu identifizieren.

6. System nach einem der vorhergehenden Ansprüche, wobei der Prozessor (66) einen Konfidenzindex der identifizierten Klasse erzeugt, dessen Wert ein Prozentsatz ist, der die Konfidenz in die identifizierte Klasse kennzeichnet, die durch den Prozessor (66) identifiziert wird, wobei der Konfidenzindex vorzugsweise zumindest von der Wahrscheinlichkeit abhängt, dass das Kandidatenobjekt (100) zu der identifizierten Klasse gehört, die durch den Prozessor (66) bestimmt wird, wobei die Sortierinformationen vorzugsweise Informationen zum Sortieren des Kandidatenobjekts (100) in der identifizierten Klasse, wenn der Konfidenzindex über einer vorbestimmten Schwelle liegt, und in einer Standardklasse, wenn der Konfidenzindex unter der vorbestimmten Schwelle liegt, umfassen, wobei die vorbestimmte Schwelle vorzugsweise zwischen 50 % und 95 %, besser zwischen 60 % und 90 %, noch besser zwischen 70 % und 90 % liegt.

7. System nach einem der vorhergehenden Ansprüche, wobei das Rückmeldemittel (80, 120) mindestens eines aus einer optischen Kamera, einer Röntgenübertragungstechnologie, insbesondere einer Einzel-, Doppel- oder Mehrenergie-Röntgenübertragungstechnologie, einem Infrarot-, Ultraviolett- oder laserinduzierten Durchbruchspektrometer (LIBS) oder einer Mensch-Maschine-Schnittstelle ist.

8. System nach einem der vorhergehenden Ansprüche, wobei das Rückmeldemittel (80, 120) dazu ausgelegt ist, zusätzliche Informationen darüber bereitzustellen, ob die Klasse des Kandidatenobjekts (100) durch den Prozessor (66) korrekt identifiziert wurde oder nicht und/oder der Klasse des Kandidatenobjekts (100) entspricht.

9. System nach einem der vorhergehenden Ansprüche, wobei das Rückmeldemittel eine Mensch-Maschine-Schnittstelle (80) ist, die dazu ausgelegt ist, die durch den Prozessor (66) identifizierte Klasse für ein Kandidatenobjekt (100) und/oder den Konfidenzindex anzuzeigen und so ausgelegt ist, dass der Benutzer auswählen kann, ob die Identifikation korrekt ist oder nicht, und/oder die korrekte Klasse des Kandidatenobjekts (100) bereitstellen kann.

10. System nach einem der Ansprüche 1 bis 10, wobei das Rückmeldemittel (120) ein Detektor, insbesondere eine optische Kamera, eine Röntgenübertragungstechnologie, insbesondere eine Einzel-, Doppel- oder Mehrenergie-Röntgenübertragungstechnologie, ist, der dazu ausgelegt ist, die Klasse des Kandidatenobjekts zu identifizieren, wenn der Konfidenzindex unter der vorbestimmten Schwelle liegt.

11. System nach einem der Ansprüche 1 bis 8, wobei das Rückmeldemittel ein Detektor, zum Beispiel eine optische Kamera, eine Röntgenübertragungstechnologie, insbesondere eine Einzel-, Doppel- oder Mehrenergie-Röntgenübertragungstechnologie, ein Infrarot-, Ultraviolett- oder laserinduziertes Durchbruchspektrometer (LIBS), zum Sortieren des Kandidatenobjekts (100) mindestens einer der Klassen in Unterklassen ist, und der dazu ausgelegt ist, basierend insbesondere auf Kriterien, die sich von der akustischen Signatur unterscheiden, zu identifizieren, ob die Klasse des Kandidatenobjekts (100) korrekt identifiziert wurde.

12. System nach einem der vorhergehenden Ansprüche, umfassend eine Umleiteinheit (70, 72, 110), die in Abhängigkeit von den Sortierinformationen, die jeweils einer der Klassen entsprechen, unterschiedliche Konfigurationen annimmt, wobei jede Konfiguration das Kandidatenobjekt (100) zu verschiedenen Routen leitet, die jeweils mindestens einer der Klasse entsprechen.

13. System nach einem der vorhergehenden Ansprüche, wobei die zu sortierenden Objekte elektronische Komponenten, insbesondere Elektronikschrott, sind und die Klassen einen oder mehrere vorbestimmte Typen der elektronischen Komponenten umfassen, die zum Beispiel ausgewählt sind unter aktiven Komponenten, passiven Komponenten und elektromechanischen Komponenten und/oder genauer Transistoren, Dioden, integrierten Schaltungen, optoelektronischen Vorrichtungen, Anzeigetechnologien, Vakuumröhren, Entladevorrichtungen, Stromquellen, Batterien, Widerstände, Kondensatoren, magnetische Vorrichtungen, Memristor, Netzwerke, Wandler, Sensoren, Detektoren, Antennen, Baugruppen, Module, Hilfsmittel zur Prototypenerstellung, piezoelektrische Vorrichtungen, Kristalle, Resonatoren, Anschlüsse und Verbinder, Kabelbaugruppen, Schalter, Schutzvorrichtungen, mechanisches Zubehör (elektrisches Gehäuse, Kühlkörper, Lüfter), blanke Leiterplatten, Lampe, Wellenleiter, Memristor, CPU-Halter, CPU, Spule, Flachkondensator, MLCC-Kondensator, keramisches Dual-in-Line-Gehäuse (CERDIP), Münzzelle, zylindrischer Kondensator und Kühlkörper.

14. Verfahren zum Trainieren des Maschinenlernalgorithmus des Sortiersystems nach einem der vorhergehenden Ansprüche, wobei das Verfahren Folgendes umfasst:
- Erfassen, mit einem akustischen Detektor (60), akustischer Daten, die dem Aufprall eines zu sortierenden Kandidatenobjekts auf den Aufprallkörper (50, 104) entsprechen,
- Identifizieren der Klasse, zu der das Kandidatenobjekt (100) gehört, unter Verwendung des Maschinenlernalgorithmus, der trainiert ist, um die Klasse basierend auf akustischen Daten des Aufpralls von zuvor erfassten Objekten und zusätzlichen Informationen, die die Objekte beschreiben, zu identifizieren;
- Erzeugen einer Sortierinformation basierend auf der identifizierten Klasse für das Kandidatenobjekt,
- Erzeugen einer zusätzlichen Information über das Kandidatenobjekt in Abhängigkeit von den Sortierinformationen mit Rückmeldemitteln (80, 120),
- Trainieren des Maschinenlernalgorithmus mit den für das Kandidatenobjekt (100) erfassten akustischen Daten und den von den Rückmeldemitteln (80, 120) empfangenen zusätzlichen Informationen über das Kandidatenobjekt.

15. Verfahren zum Sortieren von Objekten, die zu mindestens zwei Klassen von Objekten gehören, die unterschiedliche akustische Signaturen bei Aufprall auf einen Aufprallkörper aufweisen, wobei das Verfahren mit einem Sortiersystem nach einem der Ansprüche 1 bis 13 durchgeführt wird, wobei das Verfahren Folgendes umfasst:
- Erfassen, mit einem akustischen Detektor (60), akustischer Daten, die dem Aufprall eines zu sortierenden Kandidatenobjekts auf den Aufprallkörper (80, 104) entsprechen,
- Identifizieren der Klasse, zu der das Kandidatenobjekt gehört, unter Verwendung eines Maschinenlernalgorithmus, der trainiert ist, um die Klasse basierend auf akustischen Daten des Aufpralls von zuvor erfassten Objekten und zusätzlichen Informationen, die die Objekte beschreiben, zu identifizieren;
- Bestimmen eines Konfidenzindex der identifizierten Klasse,
- Erzeugen einer Sortierinformation basierend auf der identifizierten Klasse für das Kandidatenobjekt und auf dem Konfidenzindex der identifizierten Klasse,
- Umleiten des Kandidatenobjekts zu einer entsprechenden Route basierend auf den Sortierinformationen.

## Revendications

1. Système de tri pour trier des objets (100) appartenant à au moins deux classes d'objets, de préférence à au moins trois classes d'objets, présentant des signatures acoustiques différentes lors d'un impact sur un corps d'impact (50, 104), le système comprenant :
- au moins un détecteur acoustique (60) configuré pour capturer des données acoustiques correspondant à l'impact d'un objet candidat (100) à trier sur le corps d'impact (50, 104),
- un processeur (66) destiné à traiter des données acoustiques afin d'identifier la classe de l'objet candidat (100), exécutant un algorithme d'apprentissage automatique entraîné à identifier la classe à laquelle appartient un objet candidat (100) sur la base de données acoustiques d'objets précédemment capturées par le détecteur acoustique (60) et d'informations supplémentaires décrivant lesdits objets, et à générer des informations de tri sur la base de la classe identifiée pour l'objet candidat,
**caractérisé par** un moyen de retour (80, 120) destiné à fournir au processeur (66) des informations supplémentaires sur l'objet candidat en fonction des informations de tri générées par le processeur (66).

2. Système selon la revendication 1, comprenant le corps d'impact (50, 104) qui est impacté par l'objet candidat (100).

3. Système selon l'une quelconque des revendications précédentes, dans lequel l'algorithme d'apprentissage automatique est basé sur tout modèle approprié, tel qu'un ou plusieurs réseaux de neurones, et/ou un ou plusieurs arbres de décision, et/ou un ou plusieurs classificateurs différents, comme par exemple des réseaux de neurones artificiels, des arbres de décision, des machines à vecteurs de support, une analyse de régression, des réseaux bayésiens, des algorithmes génétiques, de préférence sur un ou plusieurs réseaux de neurones.

4. Système selon l'une quelconque des revendications précédentes, comprenant une phase de pré-entraînement durant laquelle l'algorithme d'apprentissage automatique est entrainé sur des données acoustiques capturées pour des objets pour lesquels les classes sont connues.

5. Système selon l'une quelconque des revendications précédentes, le processeur (66) étant configuré pour déterminer les probabilités que l'objet candidat (100) appartienne à chacune des au moins deux classes à l'aide de l'algorithme d'apprentissage automatique et pour identifier la classe présentant la probabilité la plus élevée pour l'objet candidat (100).

6. Système selon l'une quelconque des revendications précédentes, dans lequel le processeur (66) génère un indice de confiance de la classe identifiée dont la valeur est un pourcentage caractérisant la confiance dans la classe identifiée par le processeur (66), l'indice de confiance dépendant de préférence au moins de la probabilité que l'objet candidat (100) appartienne à la classe identifiée déterminée par le processeur (66), les informations de tri comprenant de préférence des informations permettant de trier l'objet candidat (100) dans la classe identifiée lorsque l'indice de confiance est supérieur à un seuil prédéterminé et dans une classe par défaut lorsque l'indice de confiance est inférieur au seuil prédéterminé, le seuil prédéterminé étant de préférence compris entre 50 % et 95 %, de préférence encore entre 60 % et 90 %, idéalement entre 70 % et 90 %.

7. Système selon l'une quelconque des revendications précédentes, dans lequel le moyen de retour (80, 120) est au moins un élément parmi : une caméra optique, une technologie de transmission de rayons X, notamment une technologie de transmission de rayons X à énergie unique, double ou multiple, un spectromètre infrarouge, un spectromètre ultraviolet ou un spectromètre de plasma induit par laser (LIBS), ou une interface homme-machine.

8. Système selon l'une quelconque des revendications précédentes, dans lequel le moyen de retour (80, 120) est configuré pour fournir des informations supplémentaires indiquant si la classe de l'objet candidat (100) a été correctement identifiée ou non par le processeur (66) et/ou correspondant à la classe de l'objet candidat (100).

9. Système selon l'une quelconque des revendications précédentes, dans lequel le moyen de retour est une interface homme-machine (80) configurée pour afficher la classe identifiée par le processeur (66) pour un objet candidat (100) et/ou l'indice de confiance et configurée de manière à ce que l'utilisateur puisse sélectionner si l'identification est correcte ou non et/ou fournir la classe correcte de l'objet candidat (100).

10. Système selon l'une quelconque des revendications 1 à 10, dans lequel le moyen de retour (120) est un détecteur, notamment une caméra optique, une technologie de transmission de rayons X, notamment une technologie de transmission de rayons X à énergie unique, double ou multiple, configuré pour identifier la classe de l'objet candidat lorsque l'indice de confiance est inférieur au seuil prédéterminé.

11. Système selon l'une quelconque des revendications 1 à 8, dans lequel le moyen de retour est un détecteur, par exemple une caméra optique, une technologie de transmission de rayons X, notamment une technologie de transmission de rayons X à énergie unique, double ou multiple, un spectromètre infrarouge, un spectromètre ultraviolet ou un spectromètre de plasma induit par laser (LIBS), destiné à trier l'objet candidat (100) d'au moins une des classes en sous-classes et configuré pour identifier si la classe de l'objet candidat (100) a été correctement identifiée sur la base notamment de critères différents de la signature acoustique.

12. Système selon l'une quelconque des revendications précédentes, comprenant une unité de déviation (70, 72, 110) qui prend des configurations différentes en fonction des informations de tri correspondant chacune à l'une des classes, chaque configuration dirigeant l'objet candidat (100) vers des voies différentes correspondant chacune à au moins une des classes.

13. Système selon l'une quelconque des revendications précédentes, les objets à trier étant des composants électroniques, notamment des déchets électroniques, et les classes comprenant un ou plusieurs types prédéterminés de composants électroniques, par exemple sélectionnés parmi des composants actifs, des composants passifs et des composants électromécaniques, et/ou plus précisément des transistors, des diodes, des circuits intégrés, des dispositifs optoélectroniques, des technologies d'affichage, des tubes à vide, des dispositifs de décharge, des sources d'alimentation, des batteries, des résistances, des condensateurs, des dispositifs magnétiques, des memristances, des réseaux, des transducteurs, des capteurs, des détecteurs, des antennes, des assemblages, des modules, des aides au prototypage, des dispositifs piézoélectriques, des cristaux, des résonateurs, des bornes et connecteurs, des assemblages de câbles, des interrupteurs, des dispositifs de protection, des accessoires mécaniques (enveloppe électrique, dissipateur thermique, ventilateur), des cartes de circuit imprimé nues, une lampe, un guide d'ondes, une memristance, un support de CPU, une CPU, une bobine, un condensateur plat, un condensateur MLCC, un boîtier céramique double en ligne (CERDIP), une pile bouton, un condensateur cylindrique et un dissipateur thermique.

14. Procédé d'entraînement de l'algorithme d'apprentissage automatique du système de tri selon l'une quelconque des revendications précédentes, le procédé comprenant :
- la capture, au moyen d'un détecteur acoustique (60), de données acoustiques correspondant à l'impact d'un objet candidat à trier sur le corps d'impact (50, 104),
- l'identification de la classe à laquelle appartient l'objet candidat (100) à l'aide de l'algorithme d'apprentissage automatique entraîné à identifier la classe sur la base de données acoustiques de l'impact d'objets précédemment capturées et d'informations supplémentaires décrivant lesdits objets,
- la génération d'informations de tri sur la base de la classe identifiée pour l'objet candidat,
- la génération d'informations supplémentaires sur l'objet candidat en fonction des informations de tri au moyen d'un moyen de retour (80, 120),
- l'entraînement de l'algorithme d'apprentissage automatique avec les données acoustiques capturées pour l'objet candidat (100) et les informations supplémentaires sur l'objet candidat reçues du moyen de retour (80, 120).

15. Procédé de tri d'objets appartenant à au moins deux classes d'objets présentant des signatures acoustiques différentes lors d'un impact sur un corps d'impact, le procédé étant réalisé au moyen d'un système de tri selon l'une quelconque des revendications 1 à 13, le procédé comprenant :
- la capture, au moyen d'un détecteur acoustique (60), de données acoustiques correspondant à l'impact d'un objet candidat à trier sur le corps d'impact (80, 104),
- l'identification de la classe à laquelle appartient l'objet candidat à l'aide d'un algorithme d'apprentissage automatique entraîné à identifier la classe sur la base de données acoustiques de l'impact d'objets précédemment capturées et d'informations supplémentaires décrivant lesdits objets,
- la détermination d'un indice de confiance de la classe identifiée,
- la génération d'informations de tri sur la base de la classe identifiée pour l'objet candidat et de l'indice de confiance de la classe identifiée,
- la déviation de l'objet candidat vers une voie correspondante sur la base des informations de tri.
